# EUROPEAN PATENT APPLICATION

(11) **EP 4 593 212 A1**
(43) Date of publication of application: **30.07.2025**
(21) Application number: 23910058.9
(22) Date of filing: 08.12.2023
(51) Int. Cl.: H01R 13/631, H01R 13/502, H01R 13/508, G06F 1/16

(54) **CONNECTOR AND ELECTRONIC DEVICE**

(30) Priority: 27.12.2022 CN 202211686191
(71) Applicant: Huawei Technologies Co., Ltd., Shenzhen, Guangdong 518129 (CN)
(72) Inventor: PAN, Siyu, Shenzhen, Guangdong 518129 (CN); HU, Suining, Shenzhen, Guangdong 518129 (CN); SU, Tien Chieh, Shenzhen, Guangdong 518129 (CN)
(74) Representative: Maiwald GmbH
(86) International application number: PCT/CN2023/137660
(87) International publication number: WO 2024/140128

(57) **Abstract**

Embodiments of this application provide a connector and an electronic device. The electronic device includes a first connector. The first connector includes a floating component, a fastening bracket, and an elastic connecting member. A first insertion position and first terminals that are configured to be in insertion connection and electrical connection to a second connector are disposed on the floating component. An assembly portion of the elastic connecting member penetrates the floating component, and the assembly portion is fastened to the fastening bracket. One end of an elastic portion of the elastic connecting member surrounds a circumference of the assembly portion, and the other end of the elastic portion is mated to the floating component, so that the floating component is disposed on the fastening bracket in a floating manner by using the elastic connecting member, and the floating component can float in at least six degrees of freedom. During insertion connection to the second connector in alignment, even if there is a dimensional tolerance, an assembly tolerance, an alignment deviation caused by deformation, and the like, the floating component can absorb the tolerances and the alignment deviation through floating, so that the first connector is matched with the second connector in alignment, to implement a characteristic of high tolerance, thereby reducing or avoiding a problem such as breakage after insertion or insertion failure.

## Description

This application claims priority to Chinese Patent Application No. 202211686191.2, filed with the China National Intellectual Property Administration on December 27, 2022 and entitled "CONNECTOR AND ELECTRONIC DEVICE", which is incorporated herein by reference in its entirety.

### TECHNICAL FIELD

This application relates to the field of electronic device technologies, and in particular, to a connector and an electronic device.

### BACKGROUND

With continuous development of electronic device technologies, multi-functional terminal electronic products are increasingly favored by people. A computer is used as an example. A two-in-one tablet computer has advantages of both a notebook computer and a tablet computer, and is light, thin, convenient, and multi-functional. The two-in-one tablet computer is applicable to both entertainment and office work, can be freely transformed into a notebook computer or a tablet in a plurality of occasions such as an office, home, and outdoors, and has been gradually recognized by a large quantity of users.

A two-in-one tablet product generally includes two main body ends: a display end and a keyboard end. The display end may cooperate with and be connected to the keyboard end by using a rotating shaft mechanism, and the display end may be in insertion connection to the keyboard end, to implement wired connection. For example, the display end and the keyboard end may implement insertion connection and electrical connection by using a fixed removable electrical connector (for example, a Type-C interface). Specifically, a male connector may be fastened to the display end, an insertion plug and a male connection terminal may be fastened to the male connector, a female connector may be fastened to a corresponding position on the keyboard end, and an insertion slot and a female connection terminal may be fastened to the female connector. When the display end is inserted into the keyboard end in alignment, the insertion plug is inserted into the insertion slot, and the male connection terminal is in contact with and electrically connected to the female connection terminal, to implement electrical connection between the display end and the keyboard end.

However, in a scenario in which the display end and the keyboard end have a large dimensional tolerance and assembly tolerance, deformation, or the like, the fixed male connector and female connector have an extremely high risk of misalignment during insertion connection, which may cause a problem that the connector is prone to breakage after insertion or insertion fails.

### SUMMARY

Embodiments of this application provide a connector and an electronic device, to resolve a problem that a connector is prone to breakage after insertion or insertion fails because two main body ends in an existing electronic device have a high risk of misalignment during insertion connection.

A first aspect of embodiments of this application provides an electronic device, including a first connector. The first connector includes a floating component, a first insertion position and a plurality of first terminals are disposed on the floating component, each first terminal is at least partially located in the first insertion position, the first insertion position is configured to be in insertion connection to a second insertion position of a second connector, and the first terminal is configured to electrically connect to a second terminal of the second connector, to implement insertion connection and electrical connection between the first connector and the second connector.

The first connector further includes an elastic connecting member and a fastening bracket, the elastic connecting member includes assembly portions and elastic portions, the assembly portion penetrates the floating component, the assembly portion is fastened to the fastening bracket, the elastic portion is disposed around the assembly portion, one end of the elastic portion is mated to the assembly portion, the other end of the elastic portion is mated to the floating component, and the floating component is disposed on the fastening bracket in a floating manner by using the elastic connecting member. For example, when the elastic portion of the elastic connecting member deforms, the floating component can float relative to the fastening bracket. Because the elastic portion surrounds a circumference of the assembly portion, and two ends of the elastic portion in a deformation direction are mated to the assembly portion and the floating component respectively, the floating component can float in a plurality of degrees of freedom. For example, the floating component can float in translation along an x direction, a y direction, and a z direction relative to the fastening bracket, and the floating component can further float rotationally around the x direction, the y direction, and the z direction relative to the fastening bracket. In other words, the floating component and the first insertion position, the first terminal, and the like on the floating component can at least float in the foregoing six degrees of freedom relative to a housing of a first main body end (or a second main body end). During insertion connection to the second connector in alignment, even if there is a dimensional tolerance, an assembly tolerance, an alignment deviation caused by deformation, and the like, the floating component can absorb the tolerances, the alignment deviation, and the like through floating, so that the first connector is matched with the second connector in alignment, to implement a characteristic of high tolerance, thereby reducing or avoiding a problem such as breakage after insertion or insertion failure. In addition, the floating component can float in a plurality of degrees of freedom, which helps further improve the characteristic of tolerance.

In addition, an overall structure of the first connector is simple, each mechanical part included has high universal practicality, assembly and manufacturing are simple, and costs are low. A plurality of parallel first terminals may be disposed on one floating component, so that a degree of integration is high, and a requirement of multi-terminal connection can be satisfied in a condition of small space occupation, to satisfy a requirement of signal transmission between the first main body end and the second main body end, without a need for wireless transmission. This helps reduce a delay, reduce a probability of frame freezing and the like, and improve image quality.

In a possible implementation, the elastic portion includes a fastening base and a plurality of elastic cantilevers, the plurality of elastic cantilevers are spaced apart along a circumferential direction of the fastening base, a suspended gap exists between each elastic cantilever and the fastening base, one end of each elastic cantilever is connected to the fastening base, the fastening base is connected to the floating component, and the other end of each elastic cantilever abuts against the assembly portion. A suspended gap is formed between the elastic cantilever and the fastening base, and a spaced gap exists between the elastic cantilevers, so that the elastic cantilevers can elastically deform. Under external force, the elastic cantilevers can enable the floating component to float in the foregoing six degrees of freedom relative to the fastening bracket, to satisfy floating requirements of the floating component.

In a possible implementation, each elastic cantilever includes a bending portion and a plurality of arc-shaped extension portions, two adjacent extension portions are spaced apart in parallel along a radial direction of the fastening base, and two adjacent extension portions are connected by using the bending portion. The plurality of spaced extension portions can improve elastic strength of the elastic cantilever, to ensure that the floating component can at least float in the foregoing six degrees of freedom relative to the fastening bracket by using the elastic cantilever.

In a possible implementation, there are a plurality of elastic connecting members, and the plurality of elastic connecting members are separately located at two ends of the floating component. Structures of two ends of the floating component are symmetrical, so that structure layouts of two ends of the first connector are symmetrical. This helps simplify a structure design of the first connector, and reduce design difficulty and costs of the first connector.

In a possible implementation, an abutting position protrudes from a circumferential side wall of the assembly portion, two opposite side surfaces of the abutting position form abutting surfaces respectively, each of the assembly portions is mated to two of the elastic portions, and the two elastic portions abut against the abutting surfaces respectively. In a manner of abutting, assembly of the elastic portion to the assembly portion is facilitated when it is ensured that the floating component can be disposed on the fastening bracket in a floating manner by using the elastic portion of the elastic connecting member. An assembly manner is simple and easy to operate.

In a possible implementation, the floating component includes a floating base and a first reinforcing member, the first reinforcing member is inserted into the floating base, and the elastic portion is connected to the first reinforcing member. The first reinforcing member may be a mechanical part with high strength, and can improve strength of the entire floating component, reduce or avoid a probability of breaking or damaging the first connector or the like in an insertion connection process, and improve reliability of the first connector.

In a possible implementation, the first insertion position is formed on the floating base, the first terminal is fastened to the first reinforcing member, and the first terminal is inserted into the floating base, to improve a degree of integration of the floating component, facilitate proper arrangement of mechanical parts in the first connector, and reduce space occupied by the first connector.

In a possible implementation, the fastening bracket includes an upper assembly bracket and a lower assembly bracket, the upper assembly bracket covers the lower assembly bracket, a cavity is formed between the upper assembly bracket and the lower assembly bracket, the elastic connecting member and the floating component are located in the cavity, and two ends of the assembly portion are connected to the upper assembly bracket and the lower assembly bracket respectively. The fastening bracket may be used as a bearing mechanical part of the first connector, and the fastening bracket may be connected to the housing of the first main body end (or the second main body end), to facilitate fastening and assembly of the first connector to the housing. The fastening bracket is divided into the upper assembly bracket and the lower assembly bracket, and the elastic connecting member and the floating component are located between the upper assembly bracket and the lower assembly bracket. This facilitates assembly of the elastic connecting member, the floating component, and the fastening bracket, and helps improve assembly efficiency.

In a possible implementation, the electronic device further includes a second connector. The second connector includes a second insertion position and a plurality of second terminals, each second terminal is at least partially located in the second insertion position, and the second insertion position is configured to be in insertion connection to the first insertion position. When the second insertion position is in insertion connection to the first insertion position, the first terminal is electrically connected to the second terminal, to implement insertion connection and electrical connection between the first connector and the second connector, and further implement connection between the two main body ends of the electronic device.

In a possible implementation, one of the first insertion position and the second insertion position is an insertion slot, and the other of the first insertion position and the second insertion position is an insertion plug. The insertion plug fits the insertion slot, to implement insertion connection between the first connector and the second connector. A structure is simple and easy to implement.

In a possible implementation, the insertion plug includes an insert section and a connection section opposite to the insert section, two opposite side surfaces of the insert section in a length direction have guide slopes, and the two guide slopes extend away from each other along a direction from the insert section to the connection section. The guide slope can play a good guiding role, so that the insertion plug can be inserted into the insertion slot.

In a possible implementation, the insertion plug further includes a chamfer section located between the insert section and the connection section, a thickness of the insert section is less than a thickness of the connection section, and two opposite side surfaces of the chamfer section in a thickness direction are sloping surfaces. The insert section with a smaller thickness can be easily inserted into the insertion slot.

In a possible implementation, two opposite side surfaces of the insert section in a thickness direction are flat surfaces. This can ensure stable friction and contact between the first terminal and the surface, to ensure stability of electrical contact between the first terminal and the second terminal.

In a possible implementation, the second connector further includes a base body, the second insertion position is disposed on the base body, the second connector further includes a second reinforcing member, the second terminal is disposed on the second reinforcing member, and the second reinforcing member and the second terminal are inserted into the base body. The second reinforcing member may be a mechanical part with high strength, and can improve strength of the entire second connector and the second insertion position, further reduce or avoid a probability of breaking or damaging the second connector or the like in an insertion connection process, and improve reliability of the second connector.

In a possible implementation, the electronic device further includes a display end and/or a keyboard end, the display end includes a display screen, and the keyboard end includes an operation button. The first connector is disposed on one of the display end and the keyboard end, and the second connector is disposed on the other of the display end and the keyboard end. In this way, insertion connection and wired electrical connection between the display end and the keyboard end are implemented through insertion connection between the first connector and the second connector. A delay is small, which helps reduce a probability of frame freezing and the like, and improve performance of the electronic device.

A second aspect of embodiments of this application provides a connector, including a floating component. A first insertion position and a plurality of first terminals are disposed on the floating component, and each first terminal is at least partially located in the first insertion position. The connector further includes an elastic connecting member and a fastening bracket, the elastic connecting member includes assembly portions and elastic portions, the assembly portion penetrates the floating component, the assembly portion is fastened to the fastening bracket, the elastic portion is disposed around the assembly portion, one end of the elastic portion is mated to the assembly portion, the other end of the elastic portion is mated to the floating component, and the floating component is disposed on the fastening bracket in a floating manner by using the elastic connecting member. In this way, the floating component can float in a plurality of degrees of freedom relative to the fastening bracket. For example, the floating component can float in translation along an x direction, a y direction, and a z direction relative to the fastening bracket, and can float rotationally around the x direction, the y direction, and the z direction. The floating design can absorb a dimensional tolerance, an assembly tolerance, an alignment deviation caused by deformation, and the like that exist during insertion connection of the connector to another connector, to implement a characteristic of high tolerance, so that insertion connection can be well implemented. In addition, a structure of the connector is simple, assembly and manufacturing difficulty and costs are low, small space is occupied, a requirement of multi-end wired connection can be satisfied, and transmission quality of a transmission signal is high.

### BRIEF DESCRIPTION OF DRAWINGS

FIG. 1 is a diagram of a structure of an electronic device according to an embodiment of this application;
FIG. 2 is a diagram of insertion connection between a first connector and a second connector in an electronic device according to an embodiment of this application;
FIG. 3 is a diagram of separation between a first connector and a second connector in an electronic device according to an embodiment of this application;
FIG. 4 is a diagram of a structure of a first connector in an electronic device according to an embodiment of this application;
FIG. 5 is an assembly diagram of a fastening bracket in a first connector according to an embodiment of this application;
FIG. 6 is a diagram of a partially split structure of a first connector according to an embodiment of this application;
FIG. 6a is an enlarged diagram of a partial structure of assembly of an elastic connecting member and a floating component according to an embodiment of this application;
FIG. 7 is a diagram of a cross-sectional structure of a first connector according to an embodiment of this application;
FIG. 7a is another assembly diagram of a floating component and an elastic connecting member in a first connector according to an embodiment of this application;
FIG. 8 is a diagram of a structure of an elastic portion in a first connector according to an embodiment of this application;
FIG. 9 is a diagram of an assembly structure of a floating component and an elastic connecting member in a first connector according to an embodiment of this application;
FIG. 10 is a diagram of a front-view structure of another elastic portion according to an embodiment of this application;
FIG. 11 is a diagram of a front-view structure of an elastic portion according to an embodiment of this application;
FIG. 12 is a diagram of a split structure of a first connector according to an embodiment of this application;
FIG. 13 is an assembly diagram of a first terminal and a connecting member in a first connector according to an embodiment of this application;
FIG. 14 is a diagram of a split structure of a floating component in a first connector according to an embodiment of this application;
FIG. 15 is a diagram of a first main body end that deforms upward along a z direction in an electronic device according to an embodiment of this application;
FIG. 16 is a cross-sectional diagram of a floating component that floats upward along a z direction in a first connector according to an embodiment of this application;
FIG. 16a is a partially enlarged diagram of a part a in FIG. 16;
FIG. 16b is an enlarged diagram of a part b in FIG. 16;
FIG. 17 is a diagram of a first main body end that deforms downward along a z direction in an electronic device according to an embodiment of this application;
FIG. 18 is a cross-sectional diagram of a floating component that floats downward along a z direction in a first connector according to an embodiment of this application;
FIG. 18a is a partially enlarged diagram of a part c in FIG. 18;
FIG. 18b is a partially enlarged diagram of a part d in FIG. 18;
FIG. 19 is a simulation diagram of an elastic portion that deforms along a z direction in a first connector according to an embodiment of this application;
FIG. 20 is a yield curve diagram of an elastic portion in a first connector in a z direction according to an embodiment of this application;
FIG. 21 is a diagram of a first main body end that deforms along an x direction in an electronic device according to an embodiment of this application;
FIG. 22 is a diagram of a first main body end that deforms along a y direction in an electronic device according to an embodiment of this application;
FIG. 23 is a cross-sectional diagram of a floating component that floats along a y direction in a first connector according to an embodiment of this application;
FIG. 23a is a partially enlarged diagram of a part f in FIG. 23;
FIG. 23b is a partially enlarged diagram of a part e in FIG. 23;
FIG. 24 is a simulation diagram of an elastic portion that deforms along a y direction in a first connector according to an embodiment of this application;
FIG. 25 is a yield curve diagram of an elastic portion in a first connector in a y direction according to an embodiment of this application;
FIG. 26 is a simulation diagram of an elastic portion that deforms along an x direction in a first connector according to an embodiment of this application;
FIG. 27 is a yield curve diagram of an elastic portion in a first connector in an x direction according to an embodiment of this application;
FIG. 28 is a cross-sectional diagram of a floating component that floats rotationally around a y direction in a first connector according to an embodiment of this application;
FIG. 28a is a partially enlarged diagram of a part g in FIG. 28;
FIG. 28b is a partially enlarged diagram of a part h in FIG. 28;
FIG. 29 is a cross-sectional diagram of a floating component that floats rotationally around a z direction in a first connector according to an embodiment of this application;
FIG. 29a is a partially enlarged diagram of a part m in FIG. 29;
FIG. 29b is a partially enlarged diagram of a part n in FIG. 29;
FIG. 30 is a diagram of a structure of a second connector according to an embodiment of this application;
FIG. 31 is a diagram of a split structure of a second connector according to an embodiment of this application;
FIG. 32 is a top view of a second connector according to an embodiment of this application;
FIG. 33 is a side view of a second connector according to an embodiment of this application;
FIG. 34 is a diagram of separation between a first connector and a second connector in another electronic device according to an embodiment of this application; and
FIG. 35 is a diagram of a partially split structure of another first connector according to an embodiment of this application.

### Reference numerals:

100: electronic device;
   10: first connector;
      11: floating component; 111: first terminal; 112: floating base; 1121: second avoidance slot; 1122: first slot; 1123: through opening; 1124: second slot; 1125: third slot; 113: first reinforcing member; 1131: first avoidance hole; 114: first insulation member; 115: first insertion position;
      120: elastic connecting member;
         12: assembly portion; 121: abutting position;
         13: elastic portion; 131: fastening base; 132a, 132b, 132c: elastic cantilever; 133: suspended gap; 1321, 1322: elastic portion; 1323: bending portion; 134: mating portion;
      14: fastening bracket; 141: upper assembly bracket; 142: lower assembly bracket; 143: cavity;
   20: second connector;
      21: second insertion position; 211: insert section; 2111a, 2111b: guide slope; 212: connection section; 213: chamfer section;
      22: second terminal; 23: base body; 24: reinforcing member; 25: circuit board;
200: first main body end; 201: display screen;
300: second main body end; 301: operation button.

### DESCRIPTION OF EMBODIMENTS

Terms used in embodiments of this application are merely used to explain specific embodiments of this application, but are not intended to limit this application.

An embodiment of this application provides an electronic device. The electronic device may include two main body ends, for example, a first main body end and a second main body end. The two main body ends may implement physical cooperation and electrical connection in an insertion connection manner. For example, the electronic device may be a two-in-one tablet computer, and the first main body end and the second main body end may be a keyboard end and a display end. Certainly, in some other examples, the electronic device may be any other device that includes two main body ends that can be in insertion connection to each other, for example, an expansion device in an intelligent vehicle that can be inserted into or removed from a body of the vehicle.

In this embodiment of this application, an example in which the electronic device is a two-in-one tablet computer is used for description.

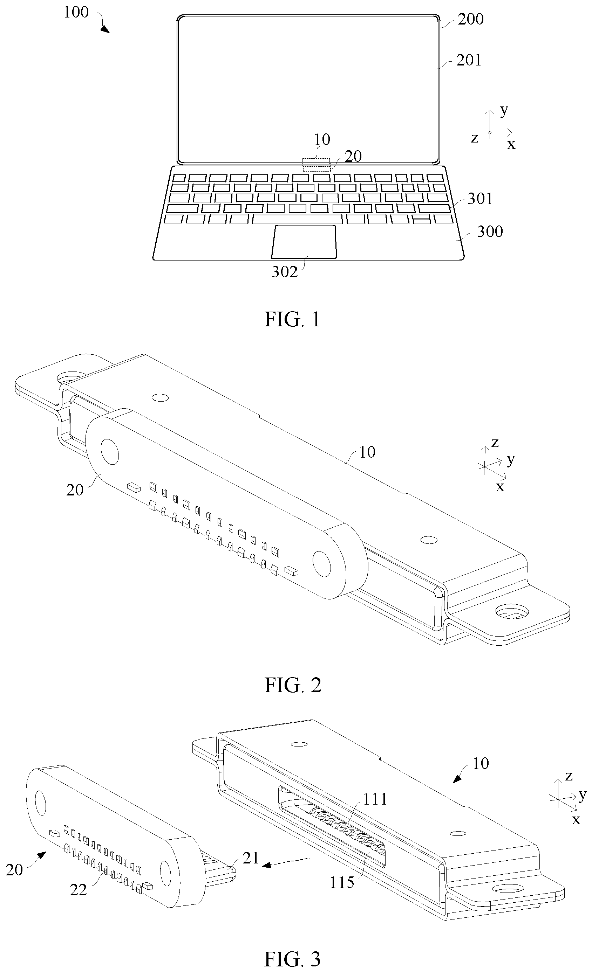

FIG. 1 is a diagram of a structure of an electronic device according to an embodiment of this application.

Refer to FIG. 1. An electronic device 100 may include a first main body end 200 and a second main body end 300. The first main body end 200 may be a display end. The first main body end 200 may include a display screen 201. The display screen 201 is configured to display an image or the like. The display screen 201 may be further configured to identify operation information of a user, such as operation position information or gesture information of the user, to implement human-machine interaction with the user.

The second main body end 300 may be a keyboard end. The second main body end 300 may include an operation button 301. The operation button 301 may be configured to identify operation information of the user, and may also implement human-machine interaction with the user and the like. It should be understood that the operation button 301 may be a protruding button mechanical part, or the operation button 301 may be a virtual key or the like.

The second main body end 300 may further include a touch area 302. The touch area 302 may also be configured to identify operation information of the user, such as gesture information, to enrich experience of operating the electronic device 100.

The first main body end 200 may cooperate with the second main body end 300 in a separable manner, so that the electronic device 100 can have two forms: a tablet and a notebook computer. For example, the first main body end 200 may be in insertion connection to the second main body end 300. When the first main body end 200 is in insertion connection to the second main body end 300, as shown in FIG. 1, the electronic device 100 may be in a form of notebook computer. When the first main body end 200 is separated from the second main body end 300 through removal, the first main body end 200 alone can be used as a tablet.

For example, insertion connection and electrical connection between the first main body end 200 and the second main body end 300 may be implemented by using a connector. For example, with reference to FIG. 1, the first main body end 200 may include a first connector 10, and the first connector 10 may include a first insertion position (for example, an insertion slot) and a first terminal. The second main body end 300 may include a second connector 20, and the second connector 20 may include a second insertion position (for example, an insertion plug) and a second terminal. The first insertion position may be in insertion connection to the second insertion position, to implement insertion connection between the first main body end 200 and the second main body end 300. In addition, when the first insertion position is in insertion connection to the second insertion position, the first terminal may be in electrical contact with and connected to the second terminal, to implement electrical signal transmission between the first main body end 200 and the second main body end 300.

A common removable connector is usually a universal serial bus (universal serial bus, USB interface for short) interface, for example, a Type-C interface, and is a fixed removable connector. In other words, the first insertion position, the first terminal, and the like of the first connector are fastened to the first main body end, and the second insertion position, the second terminal, and the like of the second connector are correspondingly fastened to the second main body end. When the first main body end is in insertion connection to the second main body end in alignment, the first connector is in insertion connection to the second connector, and the first terminal is in electrical contact with the second terminal to implement electrical connection. It should be understood that, to implement both insertion connection and electrical connection, a requirement for accuracy of alignment between the first connector and the second connector is high.

However, for a terminal device with a large size, such as a two-in-one tablet computer, there may be a large dimensional tolerance and assembly tolerance in a process of manufacturing and assembling each mechanical part and the like of two main body ends, the main body end is prone to deformation in a process of use and the like, and a fixed removable connector is accordingly prone to a position shift and the like, causing the two main body ends to have a high risk of misalignment during insertion connection. Consequently, it is difficult to accurately align a first connector with a second connector. This is likely to cause a problem, such as breakage of the connector after insertion or insertion failure, in an insertion connection process of a first main body end and a second main body end. In addition, a fixed Type-C interface has poor strength, is more prone to breakage in an insertion connection process, and has poor reliability.

In view of this, in the electronic device provided in this embodiment of this application, the first insertion position and the first terminal that are included in the first connector are disposed in a floating manner, to absorb a dimensional tolerance, an assembly tolerance, an alignment deviation caused by deformation, and the like of the first main body end and the second main body end, thereby implementing a characteristic of good tolerance. In addition, a structure is simple, manufacturing and assembly costs are low, electrical connection between a plurality of terminals can be implemented when small space is occupied, and a requirement of signal transmission between the first main body end and the second main body end is satisfied.

It should be understood that, the first connector that is designed in a floating manner may be located at the first main body end, and the second insertion position and the second terminal that are included in the second connector of the second main body end may be fastened to the second main body end. Alternatively, the first connector that is designed in a floating manner may be located at the second main body end, and the second insertion position and the second terminal that are included in the second connector of the first main body end may be fastened to the first main body end.

FIG. 2 is a diagram of insertion connection between a first connector and a second connector in an electronic device according to an embodiment of this application. FIG. 3 is a diagram of separation between a first connector and a second connector in an electronic device according to an embodiment of this application.

In this embodiment of this application, for example, a first main body end includes a first connector, and a second main body end includes a second connector. The first connector may be in insertion connection to the second connector. Refer to FIG. 2. A first connector 10 may be in insertion connection to a second connector 20, so that a first main body end may be in insertion connection to a second main body end.

Refer to FIG. 2. A thickness direction of the first connector 10 is a z direction, a length direction of the first connector 10 may be an x direction, and a width direction of the first connector 10 may be a y direction. The thickness direction, the length direction, and the width direction of the first connector 10 may be consistent with a thickness direction, a length direction, and a width direction of the first main body end 200 respectively (with reference to FIG. 1).

Refer to FIG. 3. The second connector 20 may be removed from the first connector 10, so that the first connector 10 is separated from the second connector 20, and the first main body end is separated from the second main body end.

Still refer to FIG. 3. For example, the first connector 10 may include a first insertion position 115 and a first terminal 111, and the first terminal 111 may at least partially extend into the first insertion position 115. For example, a front end of the first terminal 111 may be located in the first insertion position 115.

There may be a plurality of first terminals 111. The plurality of first terminals 111 may be arranged in two rows in parallel, and the two rows of first terminals 111 are located on an upper side and a lower side of the first insertion position 115 in a thickness direction (that is, the z direction) respectively. For example, there may be 24 first terminals 111, the 24 first terminals 111 are divided into two parallel rows, 12 first terminals 111 are arranged in each row in parallel, and the two rows of first terminals 111 are located on the upper side and the lower side of the first insertion position 115.

The second connector 20 may include a second insertion position 21 and a second terminal 22, and the second terminal 22 may at least partially extend into the second insertion position 21. For example, a front end of the second terminal 22 may extend into the second insertion position 21. Correspondingly, there may be a plurality of second terminals 22, and the plurality of second terminals 22 may be in a one-to-one correspondence with the plurality of first terminals 111. The second terminals 22 may also be arranged in two rows in parallel, and the two rows of second terminals 22 are located on an upper side and a lower side of the second insertion positions 21 in a thickness direction (that is, the z direction) respectively.

The first insertion position 115 and the second insertion position 21 can implement insertion connection to each other, to implement insertion connection between the first main body end and the second main body end. When the first insertion position 115 is in insertion connection to the second insertion position 21, the first terminal 111 may be in electrical contact with and connected to the second terminal 22, to implement electrical connection between the first main body end and the second main body end.

With reference to the accompanying drawings, the following describes in detail a floating design of the first connector by using an example in which the first insertion position 115 is an insertion slot and the second insertion position 21 is an insertion plug.

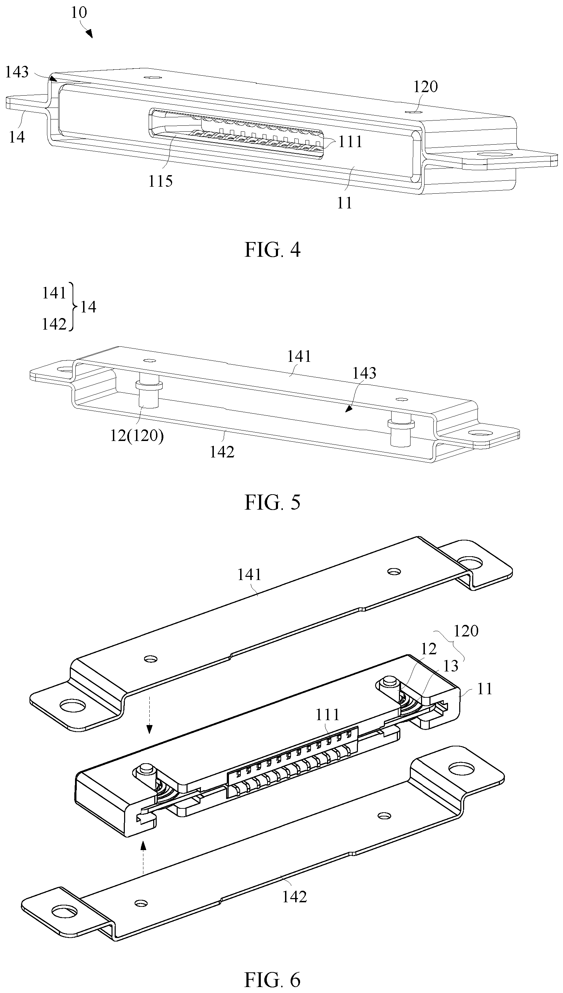

FIG. 4 is a diagram of a structure of a first connector in an electronic device according to an embodiment of this application.

Refer to FIG. 4. A first connector 10 may include a floating component 11. A first insertion position 115 and a first terminal 111 are disposed on the floating component 11. In other words, the insertion slot and the first terminal in the insertion slot are disposed in a floating manner.

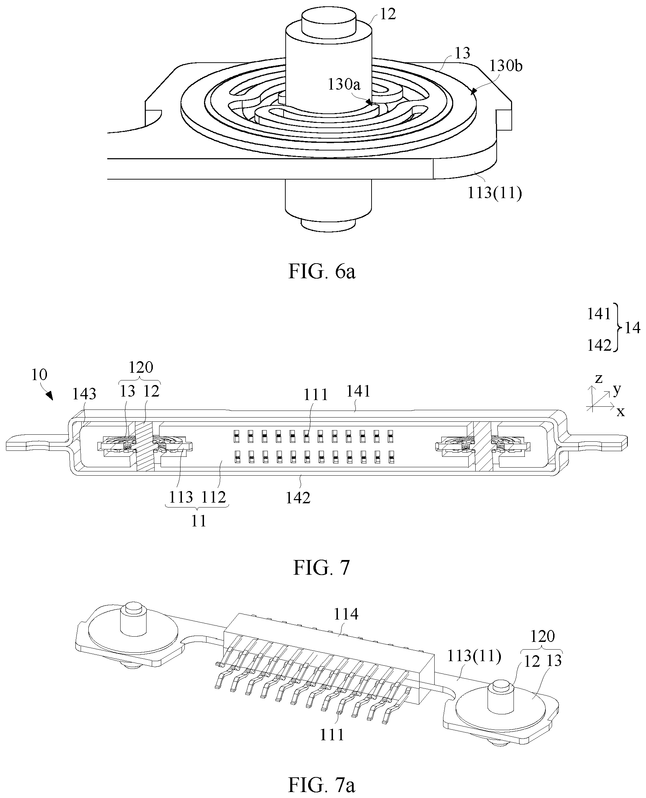

Specifically, the first connector 10 may further include an elastic connecting member 120 and a fastening bracket 14. The fastening bracket 14 may be used as a bearing mechanical part of the entire first connector 10, to facilitate fastening and assembly of the first connector 10 to a housing or the like of a first main body end. The elastic connecting member 120 may penetrate the floating component 11 (as shown in FIG. 7), and two ends of the elastic connecting member 120 may be fastened to the fastening bracket 14, so that the floating component 11 can be disposed on the fastening bracket 14 in a floating manner by using the elastic connecting member 120. The fastening bracket 14 may be fastened into the housing of the first main body end. When the floating component 11 floats relative to the fastening bracket 14, the floating component 11 can float relative to the housing of the first main body end.

Certainly, in some other examples, the first connector 10 may not include the fastening bracket 14, and the elastic connecting member 120 may be directly assembled and connected to the housing of the first main body end.

FIG. 5 is an assembly diagram of a fastening bracket in a first connector according to an embodiment of this application.

For example, with reference to FIG. 5, the fastening bracket 14 may be provided with a cavity 143. With reference to FIG. 4, the floating component 11, the elastic connecting member 120, and the like may be disposed in the cavity 143. In other words, the floating component 11 may float in the cavity 143. For example, the fastening bracket 14 may include an upper assembly bracket 141 and a lower assembly bracket 142. The upper assembly bracket 141 and the lower assembly bracket 142 are assembled together to form the cavity 143. This facilitates disposing of the floating component 11 in the cavity 143 and assembly between the floating component 11, the elastic connecting member 120, and the fastening bracket 14.

FIG. 6 is a diagram of a partially split structure of a first connector according to an embodiment of this application. FIG. 6a is an enlarged diagram of a partial structure of assembly of an elastic connecting member and a floating component according to an embodiment of this application. FIG. 7 is a diagram of a cross-sectional structure of a first connector according to an embodiment of this application.

Specifically, to implement floating disposing of the floating component 11, with reference to FIG. 6, the elastic connecting member 120 may include assembly portions 12 and elastic portions 13. The assembly portion 12 may penetrate the floating component 11. In other words, the assembly portion 12 passes through the floating component 11. Two ends of the assembly portion 12 may be located above and below two opposite sides of the floating component 11 in a thickness direction respectively. The two ends of the assembly portion 12 may be connected and fastened to the upper assembly bracket 141 and the lower assembly bracket 142 respectively. A gap for the floating component 11 to float in is reserved between the assembly portion 12 and the floating component 11 and between the floating component 11 and the fastening bracket 14.

With reference to FIG. 6 and FIG. 6a, the elastic portion 13 surrounds a circumferential outer side of the assembly portion 12, and the entire elastic portion 13 may be an annular structural part. The elastic portion 13 may be a mechanical part that can elastically deform under external force. A deformation direction of the elastic portion 13 is a direction along which the elastic portion 13 can deform. The deformation direction of the elastic portion 13 may be consistent with a direction of external force that causes deformation.

Refer to FIG. 6a. One end of the elastic portion 13 in the deformation direction (for example, an inner end 130a of the elastic portion 13 in a radial direction) is mated to the assembly portion 12, and the other end of the elastic portion 13 in the deformation direction (for example, an outer end 130b of the elastic portion 13 in the radial direction) is mated to the floating component 11. With reference to FIG. 7, the assembly portion 12 is fastened to the fastening bracket 14, so that the floating component 11 is mated to the fastening bracket 14 by using the elastic connecting member 120.

When the elastic portion 13 of the elastic connecting member 120 deforms, the floating component 11 can float relative to the assembly portion 12 and the fastening bracket 14, so that the floating component 11 is disposed on the fastening bracket 14 in a floating manner. Because the elastic portion 13 surrounds a circumference of the assembly portion 12, the two ends of the elastic portion 13 in the deformation direction are mated to the assembly portion 12 and the floating component 11 respectively, and the assembly portion 12 is fastened to the fastening bracket 14, the floating component 11 can float in a plurality of degrees of freedom. For example, the floating component 11 can move along various directions in a circumferential plane (for example, an x-y plane) relative to the assembly portion 12 and the fastening bracket 14. For example, the floating component 11 can float in translation along an x direction or a y direction relative to the fastening bracket 14. The floating component 11 can further float in translation along a z direction relative to the fastening bracket 14. The floating component 11 can further float rotationally around the x direction, the y direction, or the z direction relative to the fastening bracket 14. In other words, the floating component 11 and the first insertion position, the first terminal, and the like on the floating component 11 can at least float in the foregoing six degrees of freedom relative to the housing or the like of the first main body end. During insertion connection to a second connector in alignment, even if there is a dimensional tolerance, an assembly tolerance, an alignment deviation caused by deformation, and the like, the floating component 11 can absorb the tolerances, the alignment deviation, and the like through floating, so that the first connector is matched with the second connector in alignment, to implement a characteristic of high tolerance, thereby reducing or avoiding a problem such as breakage after insertion or insertion failure. In addition, the floating component 11 can float in a plurality of degrees of freedom, which helps further improve the characteristic of tolerance.

In addition, an overall structure of the first connector 10 is simple, each mechanical part included has high universal practicality, assembly and manufacturing are simple, and costs are low. A plurality of parallel first terminals 111 may be disposed on one floating component 11, so that a degree of integration is high, and a requirement of multi-terminal connection can be satisfied in a condition of small space occupation, to satisfy a requirement of signal transmission between the first main body end and a second main body end, without a need for wireless transmission. This helps reduce a delay, reduce a probability of frame freezing and the like, and improve image quality.

For example, with reference to FIG. 7, if the housing of the first main body end deforms along the z direction, the first connector 10 also deforms along the z direction, for example, shifts upward along the z direction. During insertion connection of the first connector 10 to the second connector, a second insertion position of the second connector first abuts against the first insertion position. In an insertion connection process, the second insertion position acts on the first insertion position on the floating component 11, and acts on the elastic connecting member 120 through the floating component 11. For example, the elastic portion 13 of the elastic connecting member 120 stretches and deforms along the z direction, and the entire floating component 11 may move downward along the z direction relative to the fastening bracket 14. In this way, the first insertion position adapts to the second insertion position, to avoid a problem of insertion failure.

It should be noted that, the elastic connecting member 120 may be an integrated mechanical part. For example, forming materials of the elastic portion 13 and the assembly portion 12 may be the same. For example, the elastic connecting member 120 may be a rubber mechanical part or a spring mechanical part that is obtained by integrally forming the assembly portion 12 and the elastic portion 13. Certainly, in some other examples, the forming materials of the elastic portion 13 and the assembly portion 12 may alternatively be different, and the elastic portion 13 and the assembly portion 12 form an integrated mechanical part in a manner such as injection molding.

Alternatively, the elastic connecting member 120 may be a mechanical part formed by mating two independent mechanical parts: the assembly portion 12 and the elastic portion 13. For example, the assembly portion 12 may be a mechanical part having a fastening function, such as a limiting column or a fastening column, and the elastic portion 13 may be a spring member, a rubber member, or the like. After being independently formed, the assembly portion 12 and the elastic portion 13 are mated to each other in a manner such as bonding, welding, clamping, abutting and limiting, or fastening by using a fastener, so that the elastic portion 13 can be fastened and assembled to the fastening bracket 14 by using the assembly portion 12.

It should be understood that, the elastic portion 13 is a mechanical part that can elastically deform, and the assembly portion 12 may be a mechanical part that cannot elastically deform. For example, the assembly portion 12 is a rigid mechanical part and only functions to connect and fasten the elastic portion 13, and does not deform when the elastic portion 13 deforms.

Alternatively, in some other examples, the assembly portion 12 may be a mechanical part that can elastically deform. For example, the entire assembly portion 12 or a part of the assembly portion 12 may be a rubber mechanical part or the like, and can elastically deform. When the elastic portion 13 elastically deforms, the assembly portion 12 may also elastically deform. Deformation of the entire elastic connecting member 120 can provide a degree of freedom for the floating component 11 to float in, so that the floating component 11 can be disposed in a floating manner by using the elastic connecting member 120.

The elastic portion 13 (or the elastic connecting member 120) and the floating component 11 may be mated to each other in a plurality of manners, for example, may be integrally formed in a manner such as injection molding and connected and fastened to each other, or may be connected and fastened to each other in a manner such as clamping, welding, or fastening by using a fastener.

The elastic portion 13 may be an integrated mechanical part. For example, the elastic portion 13 may be an annular elastic rubber mechanical part, a radially coiled spring member, or the like.

In this embodiment of this application, description is provided by using an example in which the assembly portion 12 and the elastic portion 13 are two independent mechanical parts and the elastic portion 13 elastically deforms.

FIG. 7a is another assembly diagram of a floating component and an elastic connecting member in a first connector according to an embodiment of this application.

For example, as shown in FIG. 7a, the elastic portion 13 may be an annular rubber mechanical part, the elastic portion 13 is sleeved on the assembly portion 12, an inner end of the elastic portion 13 may be connected to the assembly portion 12, an outer end of the elastic portion 13 may be connected to a first reinforcing member 113 in the floating component 11, and elastic deformation of the elastic portion 13 enables the floating component 11 to float in the foregoing six degrees of freedom relative to the fastening bracket 14.

Alternatively, the elastic portion 13 may be an annular-like mechanical part or the like that includes a plurality of elastic structures such as elastic cantilevers or spring members that can elastically deform.

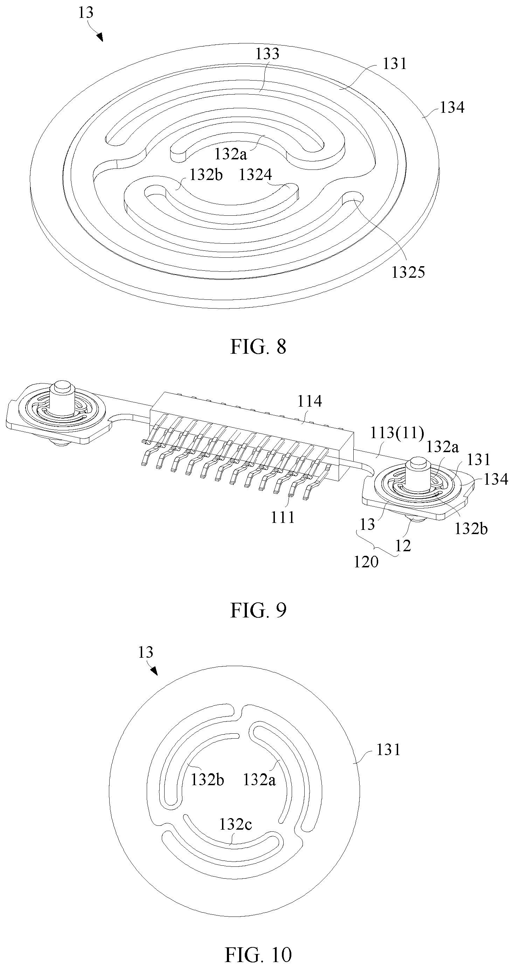

FIG. 8 is a diagram of a structure of an elastic portion in a first connector according to an embodiment of this application. FIG. 9 is a diagram of an assembly structure of a floating component and an elastic connecting member in a first connector according to an embodiment of this application.

For example, with reference to FIG. 8, the elastic portion 13 may include a fastening base 131, the fastening base 131 may be in an annular shape, and the fastening base 131 may surround a circumference of the assembly portion 12 (with reference to FIG. 9). The elastic portion 13 may further include an elastic cantilever. One end of the elastic cantilever may be a fixed end (for example, a fixed end 1325 of an elastic cantilever 132b) that does not move or rotate, and the fixed end may be fastened to the fastening base 131. The other end of the elastic cantilever may be a free end (for example, a free end 1324 of the elastic cantilever 132b), and can move and rotate relative to the fixed end under external force, to implement elastic deformation in the foregoing six degrees of freedom. There may be a plurality of elastic cantilevers, and the plurality of elastic cantilevers are spaced apart on the fastening base 131 along a circumferential direction. For example, the plurality of elastic cantilevers may include an elastic cantilever 132a and the elastic cantilever 132b, and the elastic cantilever 132a and the elastic cantilever 132b may be spaced apart inside the fastening base 131.

With reference to FIG. 9, one end (a fixed end) of each elastic cantilever (for example, the elastic cantilever 132b) may be connected to the fastening base 131, the other end (a free end) of each elastic cantilever (for example, the elastic cantilever 132b) may abut against the assembly portion 12, and the fastening base 131 may be connected to the floating component 11 (for example, the first reinforcing member 113 in the floating component 11), so that the floating component 11 is mated to the assembly portion 12 and the fastening bracket by using the elastic portion 13. Disposing of the fastening base 131 can facilitate connection between the elastic cantilever and the floating component 11, and help improve strength of the connection between the elastic cantilever and the floating component 11.

For example, the elastic portion 13 may further include an annular mating portion 134, the mating portion 134 may be disposed around a circumferential outer side of the fastening base 131, and the fastening base 131 may be connected to the floating component 11 by using the mating portion 134. Specifically, the mating portion 134 may be connected to the floating component 11 in a manner such as welding connection, bonding, clamping connection, or fastening by using a fastener.

The mating portion 134, the fastening base 131, and the elastic cantilever may be integrally formed to form the elastic portion 13. Alternatively, the fastening base 131 and the elastic cantilever may be integrally formed, and then the fastening base 131 and the mating portion 134 are assembled and fastened together to form the elastic portion 13.

The elastic cantilever 132a and the elastic cantilever 132b may be spaced apart along the circumferential direction of the fastening base 131 (with reference to FIG. 8). For example, the elastic cantilever 132a and the elastic cantilever 132b may be evenly spaced apart on a circumference of the fastening base 131, and the elastic cantilevers may occupy an equal radian on the circumference. A suspended gap 133 is formed between each elastic cantilever and the fastening base 131 (for example, a suspended gap 133 between the elastic cantilever 132a and the fastening base 131 in FIG. 8), and a spaced gap exists between the elastic cantilevers, so that the elastic cantilevers can elastically deform. Under external force, the elastic cantilevers can elastically deform along a radial direction and tilting to a radial direction. In this case, the floating component 11 can move in the x-y plane and move and float along the z direction relative to the fastening bracket. Under external force, deformation directions of a part and another part of the plurality of elastic cantilevers are different, so that the floating component 11 can float rotationally around the x direction, the y direction, and the z direction relative to the fastening bracket. For example, as shown in FIG. 9, the elastic cantilever 132a stretches downward along the z direction, the elastic cantilever 132b stretches upward along the z direction, and the floating component 11 can float rotationally around the x direction relative to the fastening bracket, to satisfy floating requirements of the foregoing six degrees of freedom.

FIG. 10 is a diagram of a front-view structure of another elastic portion according to an embodiment of this application.

A quantity of elastic cantilevers may be selected and set according to an elastic requirement, an actual design requirement, and the like. For example, there may be two elastic cantilevers (with reference to FIG. 8).

Alternatively, there may be three elastic cantilevers. Refer to FIG. 10. An elastic cantilever 132a, an elastic cantilever 132b, and an elastic cantilever 132c are included. The three elastic cantilevers are spaced apart inside the fastening base 131. The elastic cantilever 132a, the elastic cantilever 132b, and the elastic cantilever 132c may be evenly spaced apart on a circumferential inner side of the fastening base 131, and the elastic cantilevers may occupy an equal radian on a circumference. This enriches a structure design of the elastic cantilever, to better satisfy floating requirements of the floating component 11.

Certainly, in some other examples, there may be more than three elastic cantilevers.

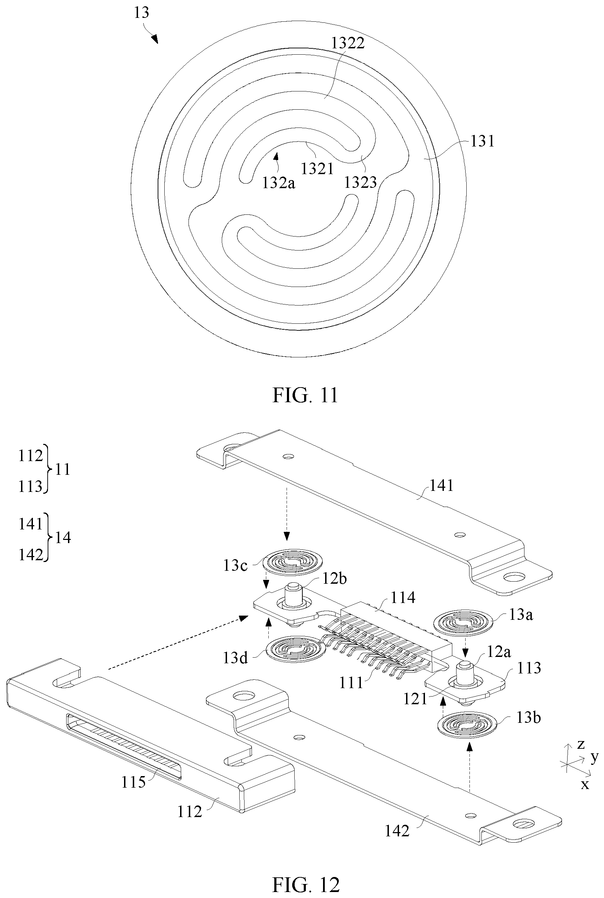

FIG. 11 is a diagram of a front-view structure of an elastic portion according to an embodiment of this application.

Refer to FIG. 11. The elastic cantilever 132a is used as an example. The elastic cantilever 132a may include a bending portion 1323 and a plurality of arc-shaped extension portions, for example, an extension portion 1321 and an extension portion 1322. It should be understood that, an arc direction of the extension portion may be or may not be parallel to the circumferential direction of the fastening base 131. The plurality of extension portions may be arranged along a radial direction of the fastening base 131, a suspended gap is reserved between the extension portions, and two adjacent extension portions may be connected by using a bending portion 1323, to form an entire elastic cantilever. The plurality of extension portions can improve elastic strength of the elastic cantilever, to ensure that the floating component 11 can at least float in the foregoing six degrees of freedom relative to the fastening bracket 14 by using the elastic cantilever.

In a radial direction from an outer side to an inner side of the fastening base 131, radian sizes of the plurality of extension portions may be sequentially reduced. For example, a radian size of the extension portion 1321 is less than a radian size of the extension portion 1322. The elastic strength of the elastic cantilever is further improved, and internal space of the fastening base 131 is fully utilized, thereby better satisfying a high elastic strength requirement of the elastic cantilever.

A forming material of the elastic cantilever may be metal. For example, the elastic cantilever may be formed by bending a metal sheet with a small width and thickness. Correspondingly, forming materials of the fastening base 131 and the mating portion 134 may also be metal.

Alternatively, the forming materials of the elastic cantilever, the fastening base 131, and the mating portion 134 may be rubber. For example, the elastic portion 13 including the elastic cantilever, the fastening base 131, and the mating portion 134 may be formed in a manner of dispensing.

In some other examples, the assembly portion, the first reinforcing member, and the elastic portion 13 may be integrally formed. For example, the elastic portion 13 may be directly connected to the assembly portion and the first reinforcing member in a manner of rubber injection molding in a process of forming the elastic portion 13, to form an integrated structure.

It should be noted that the first connector may include one elastic connecting member, or the first connector may include a plurality of elastic connecting members.

FIG. 12 is a diagram of a split structure of a first connector according to an embodiment of this application.

When there are a plurality of elastic connecting members, the plurality of elastic connecting members may be separately located at two ends of the floating component 11. For example, with reference to FIG. 12, there are two elastic connecting members. For example, an assembly portion 12a and an elastic portion 13a and an elastic portion 13b on the assembly portion 12a form a first elastic connecting member, and an assembly portion 12b and an elastic portion 13c and an elastic portion 13d on the assembly portion 12b form a second elastic connecting member. The first elastic connecting member and the second elastic connecting member are located at two ends of the floating component 11 in a length direction (that is, the x direction) respectively. Each of the two elastic connecting members is mated to the fastening bracket 14 and the floating component 11, so that the entire floating component 11 is disposed on the fastening bracket 14 in a floating manner. Structures of the two ends of the floating component 11 in the length direction are symmetrical, so that structure layouts of a left end and a right end of the first connector in a length direction are symmetrical (with reference to FIG. 7). This helps simplify a structure design of the first connector, and reduce design difficulty and costs of the first connector.

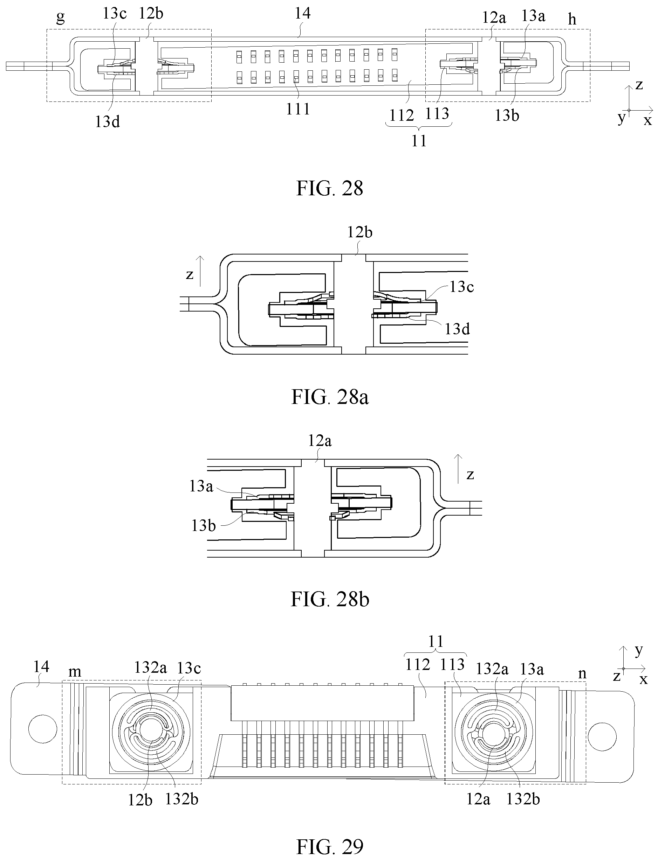

It should be understood that, when elastic connecting members are separately disposed at two ends of the floating component 11, deformation directions of the elastic connecting members at the two ends are inconsistent. For example, when the deformation directions are opposite, the floating component 11 can still float rotationally relative to the fastening bracket 14. For example, when the elastic portion 13c deforms upward along the z direction (with reference to FIG. 28), and the elastic portion 13b deforms downward along the z direction, the floating component 11 can rotate around the y direction relative to the fastening bracket 14. Correspondingly, the floating component 11 can further rotate around the x direction and the z direction relative to the fastening bracket 14. This makes it easier for the floating component 11 to float rotationally around the x direction, the y direction, and the z direction relative to the fastening bracket 14, further extends a floating scenario of the floating component 11, and avoids a problem such as insertion failure.

One assembly portion may be mated to two elastic portions 13. For example, as shown in FIG. 12, the assembly portion 12a is mated to the elastic portion 13a and the elastic portion 13b, and the assembly portion 12b is mated to the elastic portion 13c and the elastic portion 13d.

For example, the assembly portion and the elastic portion may be mated to each other in a manner of abutting. The assembly portion 12a is used as an example. An abutting position 121 may protrude from a circumferential side wall of the assembly portion 12a. Two opposite side surfaces of the abutting position 121 may form two abutting surfaces respectively. The other end of an elastic cantilever of the elastic portion 13a and the other end of an elastic cantilever of the elastic portion 13b may abut against the two abutting surfaces respectively. When the floating component 11 floats upward along the z direction, the elastic portion 13a elastically deforms under limiting effect of the abutting position 121; when the floating component 11 floats downward along the z direction, the elastic portion 13b elastically deforms under limiting effect of the abutting position 121; and when the floating component 11 moves in the x-y plane, both the elastic portion 13a and the elastic portion 13b elastically deform, so that floating requirements of the floating component 11 can be satisfied.

The assembly portion and the elastic portion are mated to each other in the manner of abutting. During actual assembly, the elastic portion 13a and the elastic portion 13b only need to pass through two ends of the assembly portion 12a respectively and then abut against the abutting position 121. This facilitates assembly of the elastic portion to the assembly portion when it is ensured that the floating component 11 can be disposed on the fastening bracket in a floating manner by using the elastic portion. An assembly manner is simple and easy to operate.

Certainly, in some other examples, one assembly portion may alternatively correspond to one elastic portion. For example, a clamping slot may be formed on a circumferential side wall of the assembly portion, and the other end of an elastic cantilever may be clamped in the clamping slot, to implement mating between the assembly portion and the elastic portion.

Still refer to FIG. 12. The floating component 11 may include a floating base 112 and a first reinforcing member 113. The first insertion position 115 may be disposed on the floating base 112. The first reinforcing member 113 may be a mechanical part with high strength. For example, the first reinforcing member 113 may be a steel sheet. The first reinforcing member 113 may be inserted into the floating base 112, to improve strength of the entire floating component 11, reduce or avoid a probability of breaking or damaging the first connector 10 or the like in an insertion connection process, and improve reliability of the first connector 10.

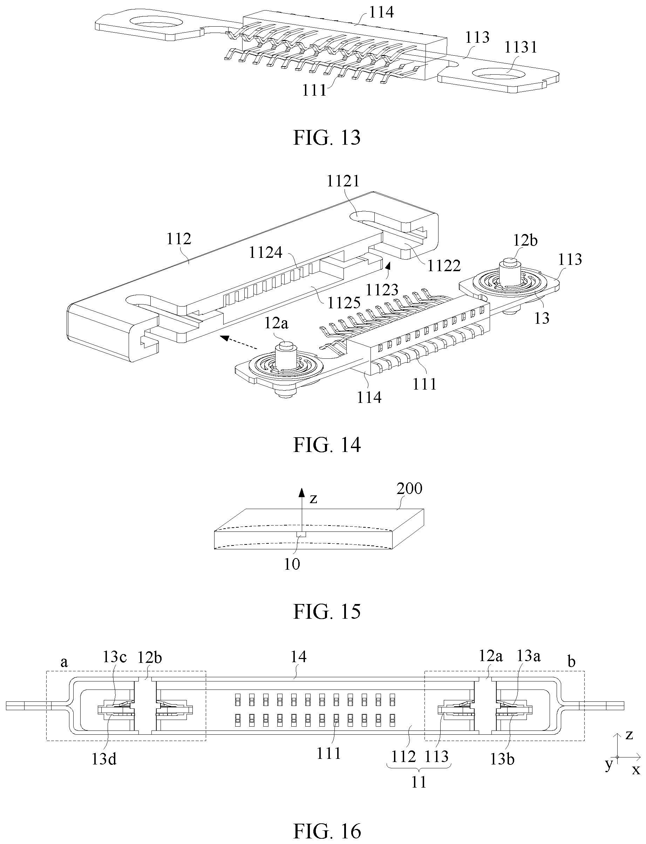

FIG. 13 is an assembly diagram of a first terminal and a connecting member in a first connector according to an embodiment of this application.

With reference to FIG. 13, the first terminal 111 may be fastened to the first reinforcing member 113. For example, the floating component may further include a first insulation member 114, a plurality of first terminals 111 are arranged on the first insulation member 114 in an interspersed manner, and the first insulation member 114 may be fastened to the first reinforcing member 113 in an interspersed manner, to ensure insulation between the first terminal 111 and the first reinforcing member 113. A front end and a rear end of each first terminal 111 are located outside the first insulation member 114, and the front end of the first terminal 111 may extend into the first insertion position, to facilitate contact with and connection to a second terminal after insertion connection. The rear end of the first terminal 111 may be electrically connected to a control unit of the first main body end, to transmit an electrical signal to the control unit of the first main body end through the first terminal 111.

Certainly, in some other examples, the first terminal 111 may alternatively be disposed on another mechanical part of the floating component 11. For example, the first terminal 111 may alternatively be disposed on the floating base 112.

A first avoidance hole 1131 may be provided on the first reinforcing member 113, and is configured to avoid the assembly portion, and the first avoidance hole 1131 may run through the first reinforcing member 113 along a thickness direction, so that the assembly portion can penetrate the first reinforcing member 113 through the first avoidance hole 1131 (with reference to FIG. 12).

FIG. 14 is a diagram of a split structure of a floating component in a first connector according to an embodiment of this application.

Correspondingly, with reference to FIG. 14, a second avoidance slot 1121 configured to avoid the assembly portion may be provided on the floating base 112, and the second avoidance slot 1121 may run through the floating base 112 along a thickness direction, so that the assembly portion can penetrate the floating base 112 through the second avoidance slot 1121 (with reference to FIG. 12). In this way, the assembly portion penetrates the entire floating component 11, and the floating component can float relative to the fastening bracket.

Still refer to FIG. 14. A first slot 1122 may be further provided on the floating base 112. For example, the first insertion position (not shown in the figure) may be formed on a front side (with reference to FIG. 12) of the floating base 112, and the first slot 1122 may be formed on a back side of the floating base 112 opposite to the front side. The first reinforcing member 113 may be inserted into the floating base 112 through the first slot 1122.

A through opening 1123 may be further formed on the back side. The through opening 1123 may run through the floating base 112 along a thickness direction, and the through opening 1123 may communicate with the second avoidance slot 1121, so that the assembly portion can pass through the through opening 1123 from the back side of the floating base 112 and penetrate the second avoidance slot 1121, to facilitate assembly of the assembly portion to the floating base.

A second slot 1124 may be further formed on the back side. The first terminal 111 may be inserted into the second slot 1124, and the second slot 1124 communicates with the first insertion position 115, so that the front end of the first terminal 111 can extend into the first insertion position 115. Correspondingly, a third slot 1125 may be further formed on the back side, and the first insulation member 114 may be inserted into the third slot 1125.

For example, during actual assembly, the first terminal 111 and the first insulation member 114 as a whole may be first assembled with the first reinforcing member 113, then the assembly portion, the elastic portion, and the first reinforcing member 113 are assembled to form a first assembly member, and the first assembly member is inserted into the floating base 112 to form a second assembly member, so that the first reinforcing member 113 is located in the first slot 1122, the first terminal 111 is located in the second slot 1124, the first insulation member 114 is located in the third slot 1125, and the assembly portion penetrates the second avoidance slot 1121. Finally, the second assembly member is assembled with the fastening bracket 14, to fasten and connect two ends of the assembly portion to the upper assembly bracket and the lower assembly bracket respectively. In this way, assembly of the first connector can be completed, the assembly is simple and convenient, and assembly efficiency is greatly improved.

The following describes a floating scenario of the floating component in an insertion connection process of the first connector and the second connector by using an example in which the housing of the first main body end deforms.

In this embodiment of this application, an example in which one assembly portion is mated to two elastic portions is used.

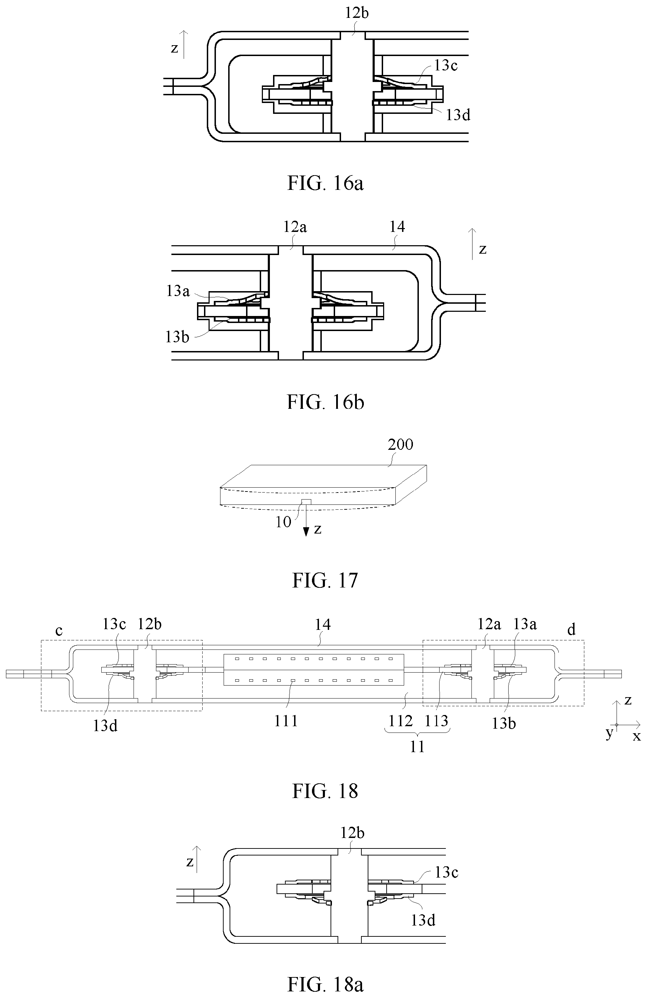

FIG. 15 is a diagram of a first main body end that deforms upward along a z direction in an electronic device according to an embodiment of this application. FIG. 16 is a cross-sectional diagram of a floating component that floats upward along a z direction in a first connector according to an embodiment of this application. FIG. 16a is a partially enlarged diagram of a part a in FIG. 16. FIG. 16b is an enlarged diagram of a part b in FIG. 16.

In a possible example, the housing of the first main body end may shift and deform along the z direction. For example, as shown in FIG. 15, the housing of the first main body end 200 shifts and deforms upward along the z direction (along a direction from the lower assembly bracket to the upper assembly bracket) (a dashed line indicates a state after the deformation), the fastening bracket and the assembly portion deform upward along the z direction with the housing, and positions of the first insertion position and the first terminal also shift upward along the z direction.

During insertion connection of the second main body end to the first main body end, the second insertion position of the second connector is in contact with and abuts against the first insertion position. Refer to FIG. 16. The elastic portion 13c and the elastic portion 13a may stretch and deform along the z direction. With reference to FIG. 16a and FIG. 16b, an elastic cantilever of the elastic portion 13c and the elastic cantilever of the elastic portion 13a stretch along the z direction. Under effect of the second insertion position, the first insertion position can drive the entire floating component 11 to float downward along the z direction relative to the fastening bracket. The first insertion position adapts to the second insertion position in alignment, and the first terminal adapts to the second terminal in alignment, to implement insertion connection and electrical connection between the first connector and the second connector.

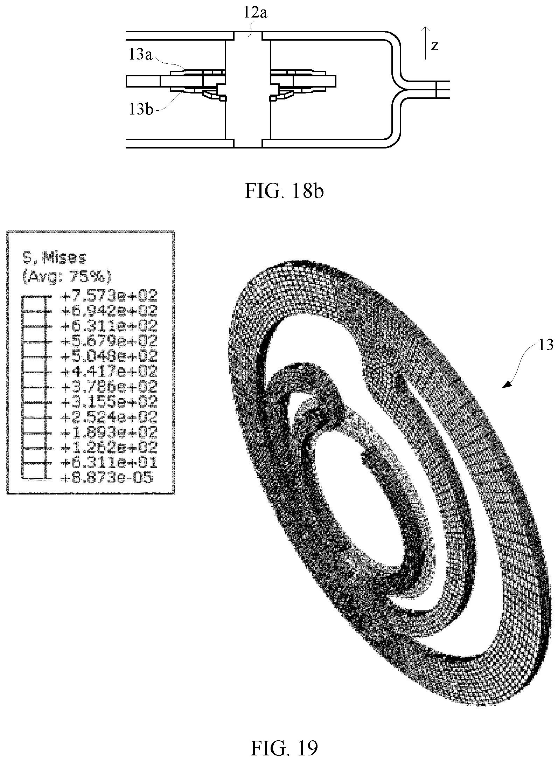

FIG. 17 is a diagram of a first main body end that deforms downward along a z direction in an electronic device according to an embodiment of this application. FIG. 18 is a cross-sectional diagram of a floating component that floats downward along a z direction in a first connector according to an embodiment of this application. FIG. 18a is a partially enlarged diagram of a part c in FIG. 18. FIG. 18b is a partially enlarged diagram of a part d in FIG. 18.

Correspondingly, as shown in FIG. 17, when the housing of the first main body end 200 shifts and deforms downward along the z direction (along a direction from the upper assembly bracket to the lower assembly bracket), the fastening bracket and the assembly portion also deform downward along the z direction, and positions of the first insertion position and the first terminal shift downward along the z direction.

During insertion connection of the second main body end to the first main body end, the second insertion position of the second connector is in contact with and abuts against the first insertion position. Refer to FIG. 18. The elastic portion 13b and the elastic portion 13d may stretch and deform along the z direction. Under effect of the second insertion position, with reference to FIG. 18a, an elastic cantilever of the elastic portion 13d may stretch along the z direction, and with reference to FIG. 18b, the elastic cantilever of the elastic portion 13b also stretches along the z direction, so that the first insertion position can drive the entire floating component 11 to float upward along the z direction relative to the fastening bracket. The first insertion position adapts to the second insertion position in alignment, and the first terminal adapts to the second terminal in alignment, to implement insertion connection and electrical connection between the first connector and the second connector. That is, the first connector can implement tolerance in the z direction.

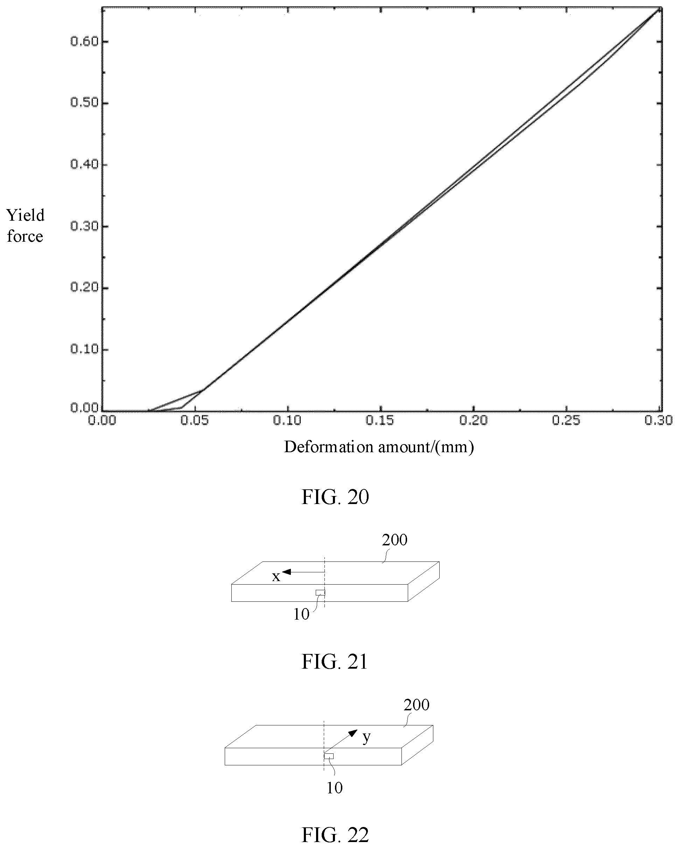

FIG. 19 is a simulation diagram of an elastic portion that deforms along a z direction in a first connector according to an embodiment of this application. FIG. 20 is a yield curve diagram of an elastic portion in a first connector in a z direction according to an embodiment of this application.

With reference to FIG. 19 and FIG. 20, the elastic portion 13 can withstand a deformation amount of 0.3 mm in the z direction without yielding of a material. This can well ensure a requirement of the floating component floating along the z direction relative to the fastening bracket.

FIG. 21 is a diagram of a first main body end that deforms along an x direction in an electronic device according to an embodiment of this application. FIG. 22 is a diagram of a first main body end that deforms along a y direction in an electronic device according to an embodiment of this application.

In another possible example, the housing of the first main body end may shift and deform along the x direction or the y direction. For example, as shown in FIG. 21, when the housing of the first main body end 200 shifts and deforms along the x direction, or as shown in FIG. 22, when the housing of the first main body end 200 shifts and deforms along the y direction, each of four elastic portions of the first connector may deform along the x direction or the y direction. For example, the housing of the first main body end 200 shifts backward along the y direction (along a direction from the front end to the rear end of the first terminal), the fastening bracket and the assembly portion deform backward along the y direction with the housing, and positions of the first insertion position and the first terminal shift backward along the y direction.

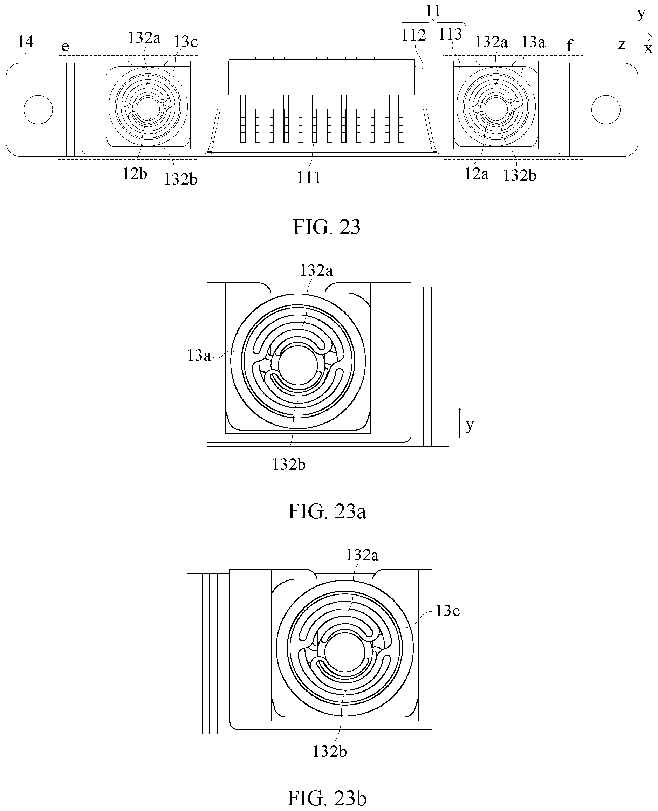

FIG. 23 is a cross-sectional diagram of a floating component that floats along a y direction in a first connector according to an embodiment of this application. FIG. 23a is a partially enlarged diagram of a part f in FIG. 23. FIG. 23b is a partially enlarged diagram of a part e in FIG. 23.

During insertion connection of the second main body end to the first main body end, the second insertion position of the second connector abuts against the first insertion position. Refer to FIG. 23. Each of elastic portions located on the assembly portion 12a and the assembly portion 12b may deform along the y direction. Under effect of the second insertion position, as shown in FIG. 23a, an elastic cantilever 132b of the elastic portion 13a (and the elastic portion 13b) may compress and deform along the y direction, and as shown in FIG. 23b, an elastic cantilever 132b of the elastic portion 13c (and the elastic portion 13d) may compress and deform along the y direction, so that the first insertion position can drive the entire floating component 11 to shift forward along the y direction relative to the fastening bracket 14. The first insertion position adapts to the second insertion position in alignment, and the first terminal adapts to the second terminal in alignment, to implement insertion connection and electrical connection between the first connector and the second connector.

For a shift and deformation of the housing of the first main body end in the x direction, refer to the shift and the deformation in the y direction. Details are not described in this embodiment. That is, the first connector can implement tolerance in the x direction and the y direction.

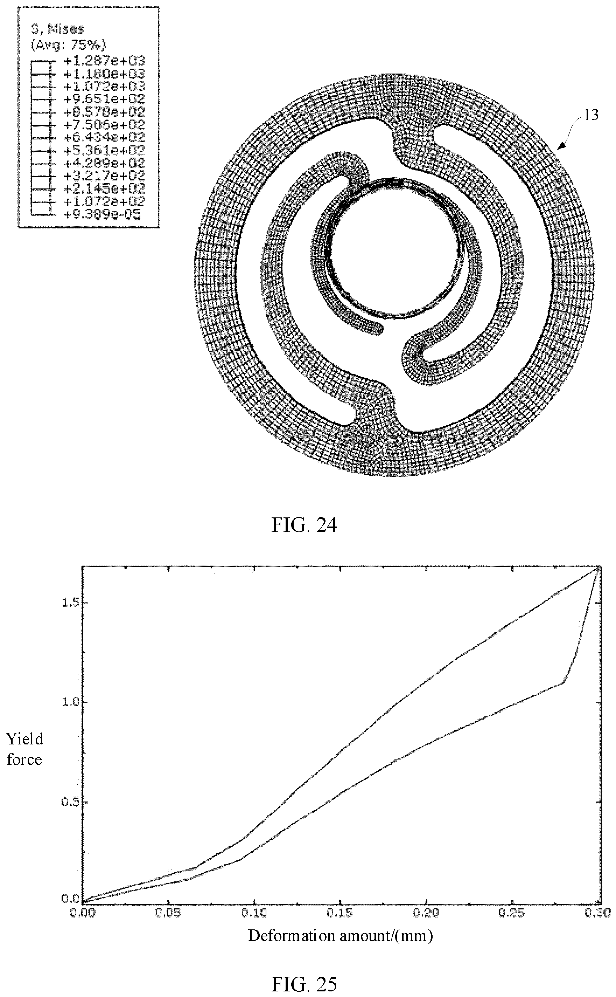

FIG. 24 is a simulation diagram of an elastic portion that deforms along a y direction in a first connector according to an embodiment of this application. FIG. 25 is a yield curve diagram of an elastic portion in a first connector in a y direction according to an embodiment of this application.

With reference to FIG. 24 and FIG. 25, the elastic portion 13 can withstand a deformation amount of 0.3 mm in the y direction without yielding of a material. This can well ensure a requirement of the floating component floating along the y direction relative to the fastening bracket.

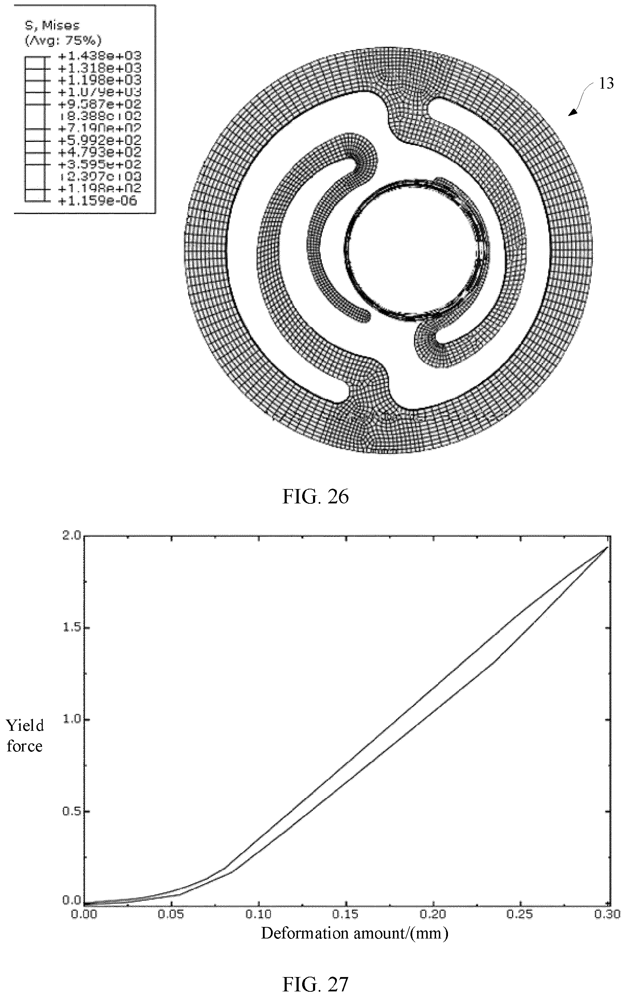

FIG. 26 is a simulation diagram of an elastic portion that deforms along an x direction in a first connector according to an embodiment of this application. FIG. 27 is a yield curve diagram of an elastic portion in a first connector in an x direction according to an embodiment of this application.

With reference to FIG. 26 and FIG. 27, the elastic portion 13 can withstand a deformation amount of 0.3 mm in the x direction without yielding of a material. This can well ensure a requirement of the floating component floating along the x direction relative to the fastening bracket.

FIG. 28 is a cross-sectional diagram of a floating component that floats rotationally around a y direction in a first connector according to an embodiment of this application. FIG. 28a is a partially enlarged diagram of a part g in FIG. 28. FIG. 28b is a partially enlarged diagram of a part h in FIG. 28.

In another possible example, the housing of the first main body end may shift and deform rotationally around an x direction or the y direction. For example, the housing of the first main body end shifts and deforms counterclockwise rotationally around the y direction, the fastening bracket and the assembly portion deform with the housing, and the first insertion position and the first terminal also shift counterclockwise rotationally around the y direction.

During insertion connection of the second main body end to the first main body end, the second insertion position of the second connector is in contact with and abuts against the first insertion position. Refer to FIG. 28. The elastic portion 13b and the elastic portion 13c may stretch and deform along a z direction. Under effect of the second insertion position, with reference to FIG. 28a, the elastic cantilever of the elastic portion 13c may stretch along the z direction, and with reference to FIG. 28b, the elastic cantilever of the elastic portion 13b may stretch along the z direction, so that the first insertion position can drive the entire floating component 11 to rotate clockwise around the y direction relative to the fastening bracket 14. The first insertion position adapts to the second insertion position in alignment, and the first terminal adapts to the second terminal in alignment, to implement insertion connection and electrical connection between the first connector and the second connector. That is, the first connector can implement tolerance around the y direction.

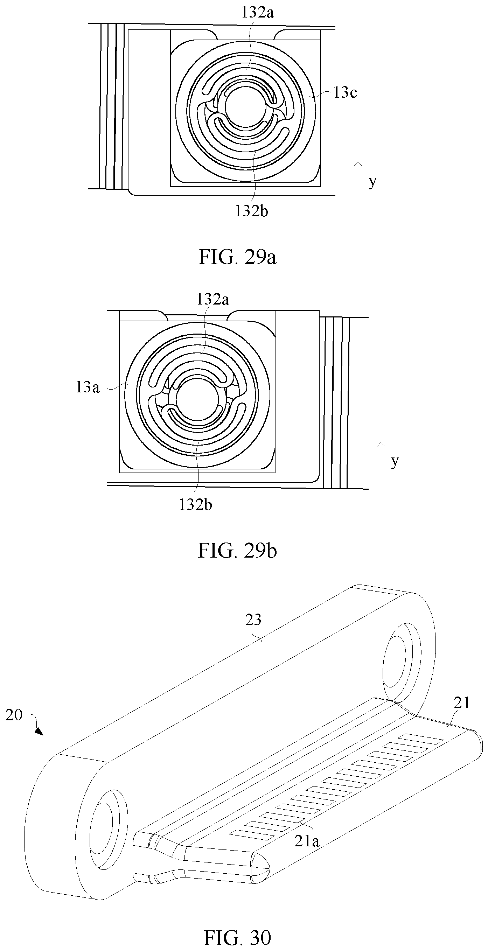

FIG. 29 is a cross-sectional diagram of a floating component that floats rotationally around a z direction in a first connector according to an embodiment of this application. FIG. 29a is a partially enlarged diagram of a part m in FIG. 29. FIG. 29b is a partially enlarged diagram of a part n in FIG. 29.

In another possible example, the housing of the first main body end may shift and deform rotationally around the z direction. For example, the housing of the first main body end shifts and deforms counterclockwise rotationally around the z direction, the fastening bracket and the assembly portion deform with the housing, and the first insertion position and the first terminal also shift counterclockwise rotationally around the z direction.

During insertion connection of the second main body end to the first main body end, the second insertion position of the second connector is in contact with and abuts against the first insertion position. Refer to FIG. 29. The elastic portion 13c (and the elastic portion 13d) and the elastic portion 13a (and the elastic portion 13b) may deform along a y direction. Under effect of the second insertion position, with reference to FIG. 29a, an elastic cantilever 132a of the elastic portion 13c may compress along the y direction, and with reference to FIG. 29b, an elastic cantilever 132b of the elastic portion 13a may compress along the y direction, so that the first insertion position can drive the entire floating component 11 to rotate clockwise around the z direction relative to the fastening bracket 14. The first insertion position adapts to the second insertion position in alignment, and the first terminal adapts to the second terminal in alignment, to implement insertion connection and electrical connection between the first connector and the second connector. That is, the first connector can implement tolerance around the z direction.

In conclusion, the first insertion position can implement translation along an x direction, a y direction, and a z direction and rotation around the x direction, the y direction, and the z direction relative to the fastening bracket, so that the first connector can implement tolerance in the foregoing six degrees of freedom, to implement insertion connection to the second connector in accurate alignment.

The following describes a second connector provided in an embodiment of this application with reference to the accompanying drawings.

FIG. 30 is a diagram of a structure of a second connector according to an embodiment of this application.

Refer to FIG. 30. A second connector 20 may include a second insertion position 21. An example in which the second insertion position 21 is an insertion plug is used. A second terminal may be at least partially located in the second insertion position 21. For example, a front end of the second terminal may be located in the second insertion position 21.

For example, when the second insertion position 21 is an insertion plug, a plurality of through grooves 21a may be formed on the insertion plug, and the front end of the second terminal may be extended to be opposite to the through groove 21a. When the first insertion position is in insertion connection to the second insertion position 21, the front end of the first terminal in the first insertion position may be accommodated in the through groove 21a, and is in electrical contact with and connected to the front end of the second terminal. The through groove 21a may limit and align the first terminal to a specific extent, which can improve stability of connection between the first terminal and the second terminal.

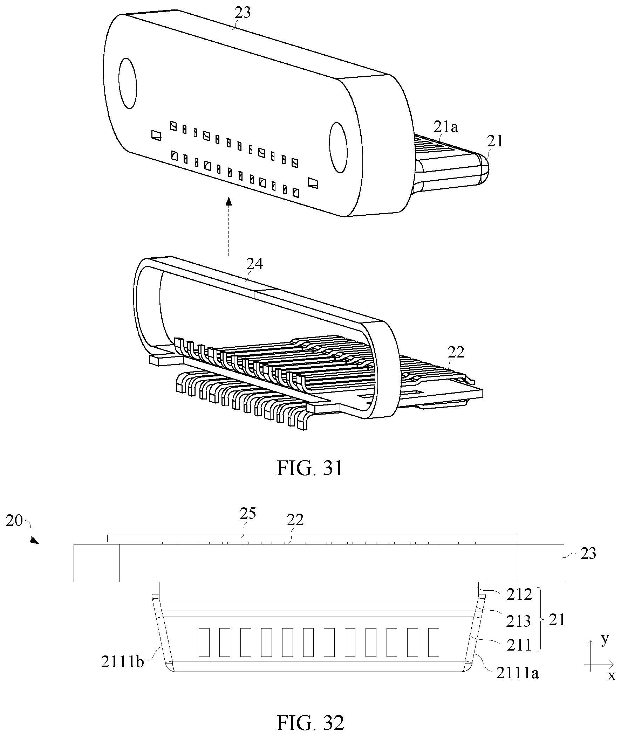

The second connector 20 may further include a base body 23 that may be used as a support mechanical part of the entire second connector 20. The second insertion position 21 may be formed on the front of the base body 23 by protruding, and a rear end of the second terminal may extend out of the back of the base body 23 (with reference to FIG. 32), to expose the second terminal and facilitate electrical connection of the second terminal.

For example, a second main body end 300 may further include a control circuit board 25 (with reference to FIG. 32), and the rear end of the second terminal may be electrically connected to the control circuit board 25.

FIG. 31 is a diagram of a split structure of a second connector according to an embodiment of this application.

Refer to FIG. 31. The second connector 20 may further include a second reinforcing member 24, and the second reinforcing member 24 may be a mechanical part with high strength. For example, the second reinforcing member 24 may be a steel sheet mechanical part. The second terminal 22 may be disposed on the second reinforcing member 24. For example, the second connector 20 may include a second insulation member (not shown in the figure), a plurality of second terminals 22 may be fastened to the second insulation member in an interspersed manner, and a front end and a rear end of each second terminal 22 are located outside the second insulation member. The second insulation member may be inserted into the second reinforcing member 24, to ensure insulation between the second terminal 22 and the second reinforcing member 24.

The second reinforcing member 24 and the second terminal 22 on the second reinforcing member 24 may be inserted into the base body 23, and the front end of the second terminal 22 extends into the second insertion position 21. The second reinforcing member 24 can improve strength of the entire second connector 20 and the second insertion position 21, further reduce or avoid a probability of breaking or damaging the second connector 20 or the like in an insertion connection process, and improve reliability of the second connector 20.

The following describes, with reference to the accompanying drawings by using an example in which the second insertion position is a protruding insertion plug, a structure of the insertion plug.

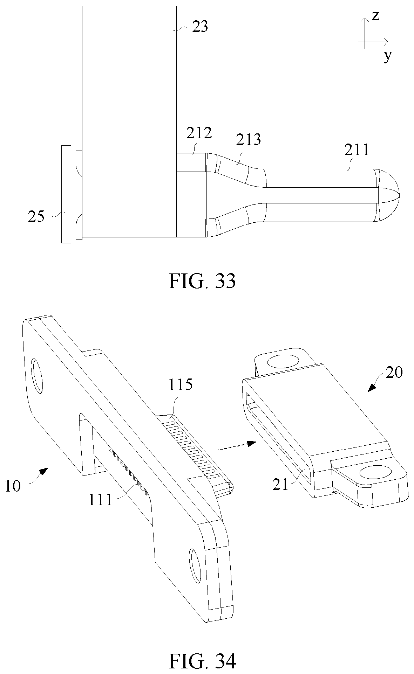

FIG. 32 is a top view of a second connector according to an embodiment of this application. FIG. 33 is a side view of a second connector according to an embodiment of this application.

Refer to FIG. 32. The insertion plug may include an insert section 211 and a connection section 212. The insert section 211 is connected to the connection section 212, and the connection section 212 is connected to the base body 23. Two opposite side surfaces of the insert section 211 in a length direction (that is, an x direction) have guide slopes (for example, a guide slope 2111a and a guide slope 2111b) respectively, and the two guide slopes extend away from each other along a direction from the insert section 211 to the connection section 212. In other words, from one end of the insert section 211 away from the connection section 212 to one end of the insert section 211 close to the connection section 212, a length of the insert section 211 in the length direction gradually increases. The guide slope plays a good guiding role, so that the insertion plug can be inserted into the insertion slot.

Refer to FIG. 33. A thickness (that is, a size in a z direction) of the insert section 211 may be less than a thickness of the connection section 212. In other words, a step structure is formed on the insertion plug. The insert section 211 with a smaller thickness can be easily inserted into the insertion slot.

The insertion plug may further include a chamfer section 213, to connect the insert section 211 to the connection section 212. For example, the chamfer section 213 is located between the connection section 212 and the insert section 211, two opposite side surfaces of the chamfer section 213 in a thickness direction are sloping surfaces, and two ends of the chamfer section 213 are connected to the connection section 212 and the insert section 211 respectively.

It should be understood that a shape and a size of the insertion slot that fits the insertion plug may be matched with a shape and a size of the insertion plug. For example, the insertion slot may include a first section and a second section, the first section is close to a slot opening, the first section and the second section may be connected by using a chamfer section 213, and an opening diameter of the first section may be greater than an opening diameter of the second section, to facilitate insertion of the insertion plug into the insertion slot.

Still refer to FIG. 33. Two opposite side surfaces of the insert section 211 in a thickness direction (that is, the z direction) may be flat surfaces. The through groove may be located on the flat surface. The flat surface can ensure stable friction and contact between the first terminal and the surface, to ensure stability of electrical contact between the first terminal and the second terminal.

Correspondingly, two opposite side surfaces of the connection section 212 in a thickness direction may be flat surfaces. When the insertion plug is inserted into the insertion slot, the insert section 211 and the chamfer section 213 may be located in the insertion slot.

In embodiments of this application, it should be understood that the first insertion position may alternatively be an insertion plug, and the second insertion position may be an insertion slot. In other words, the insertion plug is floatable. Certainly, in some other examples, the first insertion position and the second insertion position may alternatively be other structures that can be in insertion connection to each other.

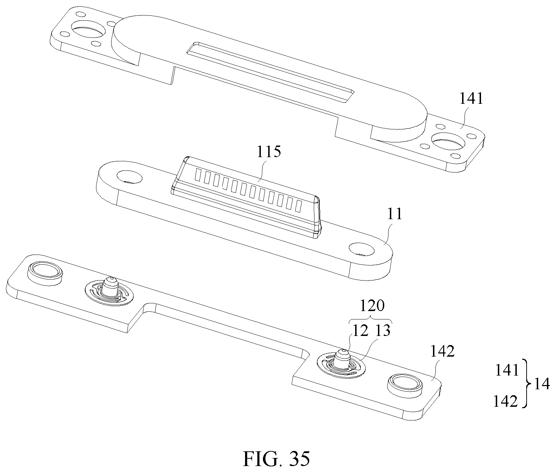

FIG. 34 is a diagram of separation between a first connector and a second connector in another electronic device according to an embodiment of this application. FIG. 35 is a diagram of a partially split structure of another first connector according to an embodiment of this application.

For example, with reference to FIG. 34, a first insertion position 115 on a first connector 10 is an insertion plug, and a second insertion position 21 on a second connector 20 is an insertion slot.

For specific structures of the insertion plug and the insertion slot, refer to the foregoing descriptions. Details are not described herein again.

Refer to FIG. 35. The insertion plug is located on a floating component 11, an elastic connecting member 120 penetrates the floating component 11, the elastic connecting member 120 is fastened to a fastening bracket 14, and the floating component 11 is disposed on the fastening bracket 14 in a floating manner by using the elastic connecting member 120. For a floating disposing manner of the floating component 11, refer to the foregoing descriptions. An assembly portion 12 of the elastic connecting member 120 may penetrate the floating component 11, and two ends of the assembly portion 12 may be fastened to an upper assembly bracket 141 and a lower assembly bracket 142 respectively. An elastic portion 13 of the elastic connecting member 120 is disposed around the assembly portion 12, an inner end of the elastic portion 13 may be mated to the assembly portion 12, and an outer end of the elastic portion 13 may be mated to the floating component 11, so that the floating component 11 can float in six degrees of freedom relative to the fastening bracket 14.

For specific structures and mating relationships of the fastening bracket 14, the elastic connecting member 120, and the floating component 11, refer to the foregoing descriptions. Details are not described herein again.

It should be noted that, when the first insertion position 115 is an insertion plug, the first insertion position 115 may at least partially extend out of a cavity of the fastening bracket 14, to ensure that the insertion plug can be inserted into the insertion slot.

In descriptions of embodiments of this application, it should be noted that, unless otherwise explicitly specified and limited, the terms "installation", "link", and "connection" should be understood in a broad sense. For example, such terms may indicate fixed connection, or may indicate indirect connection through a medium, or may indicate internal communication between two elements or an interactive relationship between two elements. A person of ordinary skill in the art may understand specific meanings of the foregoing terms in embodiments of this application according to specific cases. The terms "first", "second", "third", "fourth", and the like (if any) are intended to distinguish between similar objects but do not necessarily indicate a specific order or sequence.

Finally, it should be noted that the foregoing embodiments are merely intended to describe technical solutions of embodiments of this application, but are not intended to constitute a limitation. Although embodiments of this application are described in detail with reference to the foregoing embodiments, a person of ordinary skill in the art should understand that modifications may still be made to the technical solutions described in the foregoing embodiments or equivalent replacements may be made to some or all of technical features thereof, without departing from the scope of the technical solutions of embodiments of this application.

## Claims

1. An electronic device, comprising a first connector, wherein the first connector comprises a floating component, a first insertion position and a plurality of first terminals are disposed on the floating component, and each of the first terminals is at least partially located in the first insertion position; and
the first connector further comprises an elastic connecting member and a fastening bracket, the elastic connecting member comprises assembly portions and elastic portions, the assembly portion penetrates the floating component, the assembly portion is fastened to the fastening bracket, the elastic portion is disposed around the assembly portion, one end of the elastic portion is mated to the assembly portion, the other end of the elastic portion is mated to the floating component, and the floating component is disposed on the fastening bracket in a floating manner by using the elastic connecting member.

2. The electronic device according to claim 1, wherein the elastic portion comprises a fastening base and a plurality of elastic cantilevers, the plurality of elastic cantilevers are spaced apart along a circumferential direction of the fastening base, and a suspended gap exists between each of the elastic cantilevers and the fastening base; and
one end of each of the elastic cantilevers is connected to the fastening base, the fastening base is connected to the floating component, and the other end of each of the elastic cantilevers abuts against the assembly portion.

3. The electronic device according to claim 2, wherein each of the elastic cantilevers comprises a bending portion and a plurality of arc-shaped extension portions, the plurality of extension portions are spaced apart in parallel along a radial direction of the fastening base, and two adjacent extension portions are connected by using the bending portion.

4. The electronic device according to any one of claims 1 to 3, wherein there are a plurality of elastic connecting members, and the plurality of elastic connecting members are separately located at two ends of the floating component.

5. The electronic device according to any one of claims 1 to 4, wherein an abutting position protrudes from a circumferential side wall of the assembly portion, and two opposite side surfaces of the abutting position form abutting surfaces respectively; and
each of the assembly portions is mated to two of the elastic portions, and the two elastic portions abut against the abutting surfaces respectively.

6. The electronic device according to any one of claims 1 to 5, wherein the floating component comprises a floating base and a first reinforcing member, the first reinforcing member is inserted into the floating base, and the elastic portion is connected to the first reinforcing member.

7. The electronic device according to claim 6, wherein the first insertion position is formed on the floating base, the first terminal is fastened to the first reinforcing member, and the first terminal is inserted into the floating base.

8. The electronic device according to any one of claims 1 to 7, wherein the fastening bracket comprises an upper assembly bracket and a lower assembly bracket, the upper assembly bracket covers the lower assembly bracket, and a cavity is formed between the upper assembly bracket and the lower assembly bracket; and
the elastic connecting member and the floating component are located in the cavity, and two ends of the assembly portion are connected to the upper assembly bracket and the lower assembly bracket respectively.

9. The electronic device according to any one of claims 1 to 8, wherein the electronic device further comprises a second connector, the second connector comprises a second insertion position and a plurality of second terminals, each of the second terminals is at least partially located in the second insertion position, and the second insertion position is configured to be in insertion connection to the first insertion position; and
when the second insertion position is in insertion connection to the first insertion position, the first terminal is electrically connected to the second terminal.

10. The electronic device according to claim 9, wherein one of the first insertion position and the second insertion position is an insertion slot, and the other of the first insertion position and the second insertion position is an insertion plug.

11. The electronic device according to claim 10, wherein the insertion plug comprises an insert section and a connection section opposite to the insert section, two opposite side surfaces of the insert section in a length direction have guide slopes, and the two guide slopes extend away from each other along a direction from the insert section to the connection section.

12. The electronic device according to claim 11, wherein the insertion plug further comprises a chamfer section located between the insert section and the connection section, a thickness of the insert section is less than a thickness of the connection section, and two opposite side surfaces of the chamfer section in a thickness direction are sloping surfaces.

13. The electronic device according to claim 11 or 12, wherein two opposite side surfaces of the insert section in a thickness direction are flat surfaces.

14. The electronic device according to any one of claims 9 to 13, wherein the second connector further comprises a base body, and the second insertion position is disposed on the base body; and
the second connector further comprises a second reinforcing member, the second terminal is disposed on the second reinforcing member, and the second reinforcing member and the second terminal are inserted into the base body.

15. The electronic device according to any one of claims 9 to 14, wherein the electronic device further comprises a display end and/or a keyboard end, the display end comprises a display screen, and the keyboard end comprises an operation button; and
the first connector is disposed on one of the display end and the keyboard end, and the second connector is disposed on the other of the display end and the keyboard end.

16. A connector, comprising a floating component, wherein a first insertion position and a plurality of first terminals are disposed on the floating component, and each of the first terminals is at least partially located in the first insertion position; and
the connector further comprises an elastic connecting member and a fastening bracket, the elastic connecting member comprises assembly portions and elastic portions, the assembly portion penetrates the floating component, the assembly portion is fastened to the fastening bracket, the elastic portion is disposed around the assembly portion, one end of the elastic portion is mated to the assembly portion, the other end of the elastic portion is mated to the floating component, and the floating component is disposed on the fastening bracket in a floating manner by using the elastic connecting member.
